# EUROPÄISCHE PATENTSCHRIFT

(11) **EP 3 450 784 B1**
(45) Veröffentlichungstag und Bekanntmachung des Hinweises auf die Patenterteilung: **10.03.2021**
(21) Anmeldenummer: 17188991.8
(22) Anmeldetag: 01.09.2017
(51) Int. Cl.: F16D 3/18, F16D 3/84, B61C 9/52

(54) **STECKKUPPLUNG FÜR ANTRIEBE**
PLUG COUPLING FOR DRIVES
ACCOUPLEMENT ENFICHABLE POUR ENTRAÎNEMENTS

(43) Veröffentlichungstag der Anmeldung: 06.03.2019
(73) Patentinhaber: Siemens Mobility GmbH, 81739 München (DE)
(72) Erfinder: Oude Kotte, Freerk Jacobus, 90547 Stein (DE); Pfannschmidt, Bernd, 90574 Rosstal (DE)

(56) Entgegenhaltungen:
- EP-A1- 3 020 611
- WO-A1-02/081280
- DE-A1- 2 548 058
- DE-U1-202005 015 769

## Beschreibung

Die Erfindung betrifft eine Steckkupplung für Antriebe.

Für Antriebe, insbesondere für Schienenfahrzeuge vor allem mit Längsantrieben, an deren Enden jeweils ein Achsgetriebe befestigt ist, kann ein Läufer eines Motors direkt auf den Eingangswellen der beiden Achsgetriebe über radialsteife Kupplungen angeordnet werden. Dies führt jedoch bei bisher bekannten Kupplungen dazu, dass spezielle Montageöffnungen in den Getriebe vorzusehen sind, bzw. die Gehäuse der Motoren mit derartigen Öffnungen versehen sein müssen, wobei jedoch Montageöffnungen die Gehäusestruktur und damit die Festigkeit beeinträchtigen

DE 25 48 058 A1 beschreibt einen Antrieb mit - zumindest einem Fahrmotor mit einer Antriebswelle, - zumindest einer Abtriebswelle, die mit einem Getriebe mechanisch verbunden ist, - wobei Antriebswelle und Abtriebswelle im Wesentlichen axial fluchten, - wobei die Antriebswelle einen ersten Kopplung und die Abtriebswelle einen zweiten Kopplungsabschnitt aufweisen, über die mittels mechanischer Kopplung ein Drehmoment von der Antriebswelle zur Abtriebswelle übertragbar ist, - wobei jeder Kopplungsabschnitt mit seiner Welle drehfest verbunden ist und die Kopplungsabschnitte durch axiales Zusammenstecken mechanisch koppelbar sind.

Nachteilig bei derartigen Montageöffnungen ist es weiter, dass sie verschlossen sein müssen, insbesondere wenn derartige Antriebe in industrieller Umgebung oder in klimatisch anspruchsvoller Umgebung betrieben werden.

Ausgehend davon liegt der Erfindung die Aufgabe zugrunde, eine Kupplung, insbesondere für Schienenfahrzeuge bereitzustellen, welche einen ordnungsgemäßen Betrieb eines Antriebs gestattet als auch eine einfache Montage und Überprüfbarkeit der Funktionsfähigkeit des Antriebs gewährleistet.

Die Lösung der gestellten Aufgabe gelingt durch einen Antrieb gemäß Anspruch 1.

Durch die erfindungsgemäße Montage von Antriebswelle und Abtriebswelle wird eine Kupplung geschaffen, die erfindungsgemäß lediglich durch Ineinanderschieben der beiden Kopplungsabschnitte realisiert wird. Dabei ist ein Kopplungsabschnitt mit der Antriebswelle und damit mit einem Läufer einer dynamoelektrischen Maschine, wie einer Asynchronmaschine oder einer permanent- oder elektrisch erregten Synchronmaschine drehfest verbunden. Der jeweils andere Kopplungsabschnitt ist mit der Abtriebswelle und damit einer Getriebewelle und einem Getriebe drehfest verbunden.

Das Getriebe treibt jeweils ein Einzelrad oder jeweils eine Radsatzwelle eines Schienenfahrzeugs oder eines anderen elektrisch angetriebenen Fahrzeugs, wie beispielsweise einen Miningtruck oder einen E-Bus an.

Durch die beiden Kopplungsabschnitte werden die im Wesentlichen axial fluchtenden Wellen von Läufer und Getriebe mechanisch verbunden und übertragen das Antriebsmoment der dynamoelektrischen Maschine in das Getriebe bei gleichzeitigem Ausgleich von Axialversatz, Winkelversatz zwischen Antriebs- und Abtriebswelle.

Die bisher notwendigen Montageöffnungen eines Gehäuses an der Kupplung werden vermieden und die Montagezeiten derartiger Getriebeanordnungen reduzieren sich.

Erfindungsgemäß wird durch das axiale Ineinanderschieben der Kopplungsabschnitte gleichzeitig eine Abdichtfunktion geschaffen, eine Labyrinthdichtung realisiert, die u.a. auch bei radialen und/oder axialen Bewegungen der Kopplungsabschnitte eine ausreichende Dichtwirkung der Kupplung gewährleistet.

Die Erfindung sowie weitere vorteilhafte Ausgestaltungen der Erfindung sind den Ausführungsbeispielen zu entnehmen; darin zeigen
- FIG 1: einen Längsschnitt eines Längsantriebs,
- FIG 2: einen Teillängsschnitt des Längsantriebs,
- FIG 3: einen weiteren Teillängsschnitt des Längsantriebs.

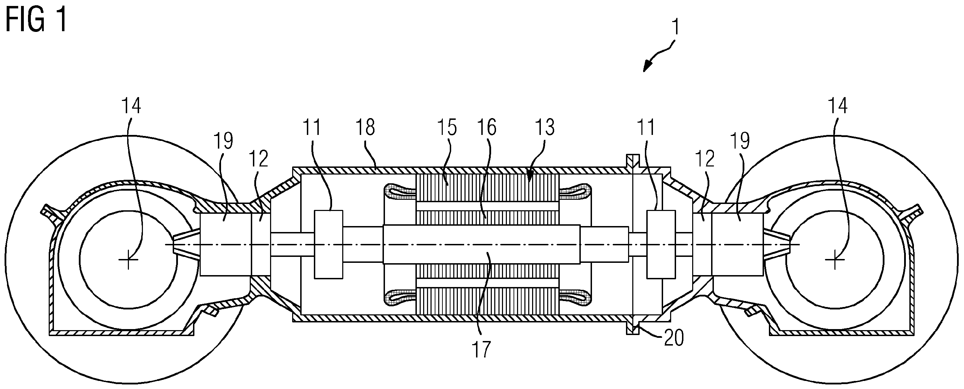

FIG 1 zeigt einen Längsschnitt eines Doppelachsantriebs 1, der sowohl als Mittenantrieb als auch als außenliegender Längsantrieb in einem nicht näher dargestellten Drehgestell oder Fahrzeugrahmen angeordnet ist. Dieser Doppelachsantriebs 1 ist insbesondere für Niederflurfahrzeuge geeignet. Dabei ist zwischen zwei Treibachsen 14 ein Fahrmotor 13 angeordnet, der einen Stator 15 und einen eine Motorwelle 17 umgebenden Rotor 16 aufweist. Die um eine Drehachse rotierbare Motorwelle 17 ist dabei über Lageranordnungen 19 gelagert. Der Stator 15 ist drehfest in einer Gehäuseeinheit 18 untergebracht.

Die Gehäuseeinheit 18 ist in zwei Gehäuseabschnitte aufgeteilt, die an einer Flanschfläche 20 miteinander verbindbar sind. Vorteilhafterweise verlaufen diese Flanschflächen 20 senkrecht zur Motorwelle 17 des Rotors 16 des Fahrmotors 13 oder in einer parallelen Ebene zu den Treibachsen 14. Damit vereinfacht sich die Montage bzw. Herstellung einer derartiger Gehäuseeinheiten 18 und damit eines Doppelachsantriebs 1.

In dem vorliegenden Fall befindet sich die Flanschfläche 20 des Flansches axial außerhalb des Stators 15. Damit weist der Stator 15 einen axial durchgehenden Sitz in einem Gehäuseabschnitt auf. Dies vereinfacht die Demontierbarkeit dieser Gehäuseabschnitte. Damit können beispielsweise elektrische Anschlüsse eines Wicklungssystems des Fahrmotors 13 besonders günstig auf einer Seite des Stators 15 zugänglich angeordnet werden.

In den Gehäuseabschnitten sind dabei jeweils Teile des Fahrmotors 13, Kupplung 11, Lageranordnungen 19 für Getriebe 12 und Fahrmotors 13. In zumindest einem der Gehäuseabschnitte kann außerdem eine nicht näher dargestellte Bremse, insbesondere zwischen Kupplung 11 und Fahrmotor 13 angeordnet sein. Am bzw. in den Gehäuseabschnitten der Gehäuseeinheit 18 können optional Luftleitvorrichtungen für Kühlluftströme, als auch Kühlmitteleinlässe bzw. Kühlmittelauslässe an der Hülle dieser Gehäuseeinheit 18 vorgesehen sein.

Das Getriebe 12 ist als Hypoidkegelradgetriebe oder als normales Winkelgetriebe ausgeführt. Diese kompakten Getriebe eignen sich insbesondere für derartige Doppelachsantriebe, da sich dort der Kraftfluss auf engstem Raum nahezu ideal umlenken lässt.

Über die Treibachse 14 wird mittels eines Getriebes 12 jeweils ein Rad bzw. ein Radsatz mit zwei Rädern angetrieben. Die Treibachse 14 dieser Räder bzw. dieser Radsätze verlaufen dabei im Wesentlichen senkrecht zur Motorwelle 17 des Fahrmotors 13.

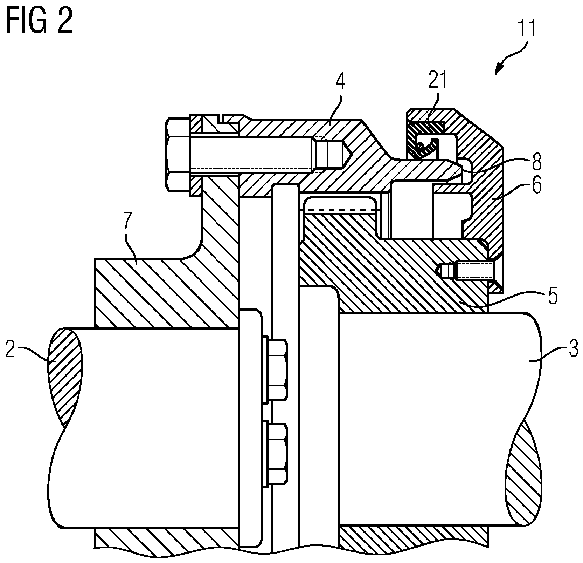

FIG 2 zeigt einen Teillängsschnitt eines Antriebsstrangs gemäß FIG 1 mit einer Antriebswelle 2 und einer Getriebewelle 3. Die Antriebswelle 2 ist dabei die Motorwelle 17 des Fahrmotors 17. Die Motorwelle 17 ist mit dem Rotor 16 des Fahrmotors 13 drehfest verbunden, wobei die Getriebewelle 3 mit einem dementsprechenden Getriebe 12 drehfest verbunden ist. Die drehfesten Ausgestaltungen zwischen Rotor 16, Antriebswelle 2 und einem ersten Kopplungsabschnitt 4, als auch zwischen einem zweiten Kopplungsabschnitt 5 und der Getriebewelle 3 werden beispielsweise durch Schrumpfvorgänge oder Passfederverbindungen erreicht.

Die Drehmomentenübertragung ausgehend von der dynamoelektrischen Maschine, also dem Fahrmotor 13, findet nun wie folgt statt:
Über die Antriebswelle 2, den darauf fixierten Flansch 7, über das erste Kopplungsstück 4, auf das zweite Kopplungsstück 5, auf die Getriebewelle 3, das Getriebe 12 auf das Rad bzw. die Radsatzwelle.

Die Motorwelle 17 treibt also in jeder axialer Richtung ein Getriebe 12 an. Gemäß FIG 1 ist dabei jeweils eine erfindungsgemäße Kupplung 11 - in Antriebsrichtung - vor dem Getriebe 12 angeordnet. Es ist ebenso möglich nur eine derartige Kupplung 11 ggf. ergänzend zu einem anderen Kupplungskonzept pro Doppelachsantrieb 1 vorzusehen.

Zur Abdichtung dieser durch den Flansch 7 und die Kopplungsabschnitte 4,5 wird durch axiales Ineinanderschieben eine Kupplung 11 geschaffen. Dadurch werden Montageöffnungen vermieden und die Montagezeit einer derartigen Kupplung 11 verkürzt. Durch spezielle Ausgestaltung der Außenverzahnung des ersten Kopplungsabschnitts 4 und der Innenverzahnung des zweiten Kopplungsabschnitts 5, kann eine Balligzahnkupplung geschaffen werden.

Durch ein Dichtelement 6, das mit einer Schraubenverbindung am zweiten Kopplungsabschnitt 5 befestigbar ist, wird ein für eine Labyrinthdichtungswirkung an der Kupplung 11 notwendiges Gegenelement bereitgestellt, das zusammen mit einem dementsprechend ausgestalteten ersten Kopplungsabschnitt 4 die Labyrinthdichtung 8 bildet.

Des Weiteren formen sich auch durch das axiale Zusammenstecken der Kopplungsteile 4, 5 Dichtelemente aus, insbesondere durch dementsprechend korrespondierend geformte Elemente bzw. Gegenelemente.

Es liegt somit eine abgedichtete Balligzahnkupplung vor.

Die Dichtungen sind grundsätzlich so ausgebildet, dass axiale und/oder radiale Bewegungen und/oder Winkelversätze der Kopplungsabschnitte 4, 5 ausgleichbar sind, ohne dass Schmiermittel aus der Kupplung 11 austritt.

Der erste Kopplungsabschnitt 4 und der Flansch 7 sind, mittels in Umfangsrichtung betrachtet achsparalleler Schraubverbindungen mehrfach miteinander mechanisch verbunden.

Es ist ebenso möglich, den Flansch 7 mit dem ersten Kopplungsabschnitt 4 einstückig auszuführen. Dieses einstückige Teil bildet dann die Verbindung zum Kopplungsabschnitt 5 und damit zur Abtriebswelle 2. Durch dementsprechende Ausgestaltung von Gegenelementen an diesem einstückigen Teil wird zusammen mit Dichtelementen 6, die am Kopplungsteil 5 fixiert sind ebenfalls eine Labyrinthdichtung 8 geschaffen.

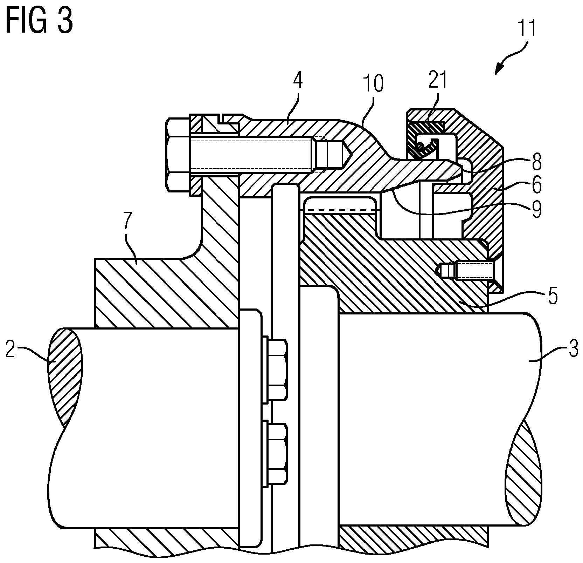

Ergänzend zur Ausführung der Kupplung 11 gemäß FIG 2, sind am Kopplungsabschnitt 4 oder auch am einstückigen Teil das Flansch 7 und ersten Kopplungsabschnitt 4 in sich vereint, Schlupfradien 10 und/oder Schrägen 9 gemäß FIG 3 vorgesehen, die den Zusammenbau der Kupplung 11 vereinfachen und Beschädigungen vermeiden.

Derartige Kupplungen 11 werden beispielsweise bei Doppelachsantrieben 1 von Niederflurfahrzeugen z.B. Straßenbahnen eingesetzt.

## Patentansprüche

1. Antrieb mit
- zumindest einem Fahrmotor (13) mit einer Antriebswelle (2),
- zumindest einer Abtriebswelle (3), die mit einem Getriebe (12) mechanisch verbunden ist,
- wobei Antriebswelle (2) und Abtriebswelle (3) im Wesentlichen axial fluchten,
- wobei die Antriebswelle (2) einen ersten Kopplungsabschnitt (4) und die Abtriebswelle (3) einen zweiten Kopplungsabschnitt (5) aufweisen, über die mittels mechanischer Kopplung ein Drehmoment von der Antriebswelle (2) zur Abtriebswelle (3) übertragbar ist,
- wobei jeder Kopplungsabschnitt (4,5) mit seiner Welle (2,3) drehfest verbunden ist und die Kopplungsabschnitte (4,5) durch axiales zusammenstecken mechanisch koppelbar sind,
**dadurch gekennzeichnet, dass**
- an dem zweiten Kopplungsabschnitt (5) der Abtriebswelle (3) ein Dichtelement (6) befestigt ist, welches derart ausgeformt ist, dass es durch das axiale Zusammenstecken zusammen mit einem an dem ersten Kopplungsabschnitt (4) ausgebildeten Element eine Labyrinthdichtung (8) bildet.

2. Antrieb nach Anspruch 1, **dadurch** g e k e n n - z e i c h n e t , dass die durch axiales zusammenstecken gebildet Kupplung (11) als Balligzahnkupplung ausgebildet ist, indem die Kopplungsabschnitte (4,5) dementsprechend ausgestaltete Zähne aufweisen.

3. Antrieb nach Anspruch 2, **dadurch gekennz eichnet** , dass die Balligzahnkupplung durch Ausgestaltung der Kopplungsabschnitte (4,5) abdichtbar ist.

4. Antrieb nach Anspruch 1, **dadurch gekennze ichnet** , dass das Dichtelement (6) mittels einer Schraubenverbindung an dem zweiten Kopplungsabschnitt (5) befestigt ist.

5. Fahrzeug, mit einem Antrieb, insbesondere einem Längsantrieb eines Niederflurfahrzeugs nach einem der vorhergehenden Ansprüche.

## Claims

1. Drive with
- at least one traction motor (13) with a drive shaft (2),
- at least one output shaft (3) which is connected mechanically to a gear (12),
- wherein drive shaft (2) and output shaft (3) are aligned substantially axially,
- wherein the drive shaft (2) and the output shaft (3) have a first and second coupling portion (4, 5) in each instance, by way of which a torque can be transmitted from the drive shaft (2) to the output shaft (3) by means of mechanical coupling,
- wherein each coupling portion (4, 5) is connected to its shaft (2, 3) in a rotationally fixed manner and the coupling portions (4, 5) can be coupled mechanically by being axially plugged together,
**characterised in that**
- a sealing element (6) is fastened to the second coupling portion (5) of the drive shaft (3) and is moulded such that it forms a labyrinth seal (8) by axially plugging in together with an element embodied on the first coupling portion (4).

2. Drive according to claim 1, **characterised in that** the coupling (11) formed by being axially plugged together is embodied as a spherical tooth coupling, by the coupling portions (4, 5) having accordingly embodied teeth.

3. Drive according to claim 2, **characterised in that** the spherical tooth coupling can be sealed by the embodiment of the coupling portions (4, 5).

4. Drive according to claim 1, **characterised in that** the sealing element (6) is fastened to the second coupling portion (5) by means of a screw connection.

5. Vehicle, with a drive, in particular a longitudinal drive of a low-floor light rail vehicle according to one of the preceding claims.

## Revendications

1. Entraînement comprenant
- au moins un moteur (13) de traction ayant un arbre (2) d'entraînement,
- au moins un arbre (3) de sortie qui est relié mécaniquement à une transmission (12),
- dans lequel l'arbre (2) d'entraînement et l'arbre (3) de sortie sont sensiblement alignés axialement,
- dans lequel l'arbre (2) d'entraînement a une première partie (4) d'accouplement et l'arbre (3) de sortie a une deuxième partie (5) d'accouplement, parties par lesquelles au moyen d'un accouplement mécanique, un couple peut être transmis de l'arbre (2) d'entraînement à l'arbre (3) de sortie,
- dans lequel chaque partie (4, 5) d'accouplement est solidaire en rotation de son arbre (2, 3) et les parties (4, 5) d'accouplement peuvent être accouplées mécaniquement en étant enfichées ensemble axialement,
**caractérisé en ce que**
- sur la deuxième partie (5) d'accouplement de l'arbre (3) de sortie est fixé un élément (6) d'étanchéité, qui est conformé de manière à former, par l'enfichage axial ensemble avec un élément constitué sur la première partie (4) d'accouplement, une étanchéité (8) à labyrinthe.

2. Entraînement suivant la revendication 1, **caractérisé en ce que** l'accouplement (11) formé par l'enfichage axial est constitué sous la forme d'un accouplement à dent bombé, par le fait que les parties (4, 5) d'accouplement ont des dents conformées en conséquence.

3. Entraînement suivant la revendication 2, **caractérisé en ce que** l'accouplement à dent bombé peut être rendu étanche par conformation des parties (4, 5) d'accouplement.

4. Entraînement suivant la revendication 1, **caractérisé en ce que** l'élément (6) d'étanchéité est fixé à la deuxième partie (5) d'accouplement au moyen d'un vissage.

5. Véhicule ayant un entraînement, notamment un entraînement longitudinal d'un véhicule à plancher surbaissé, suivant l'une des revendications précédentes.
